# FASCICULE DE BREVET EUROPEEN

(11) **EP 4 452 608 B1**
(45) Date de publication et mention de la délivrance du brevet: **28.01.2026**
(21) Numéro de dépôt: 22847140.5
(22) Date de dépôt: 16.12.2022
(51) Int. Cl.: B29C 70/38, B29C 70/56

(54) **MACHINE D'APPLICATION DE FIBRES EQUIPEE D'UN SYSTÈME LIMITEUR DE TENSION**
FASERAPPLIKATIONSMASCHINE MIT EINEM SPANNUNGSBEGRENZUNGSSYSTEM
FIBRE APPLICATION MACHINE PROVIDED WITH A TENSION-LIMITING SYSTEM

(30) Priorité: 23.12.2021 FR 2114113
(43) Date de publication de la demande: 30.10.2024
(73) Titulaire: Coriolis Group, 56530 Quéven (FR)
(72) Inventeur: LE MOIGNE, Kevin, 29000 Quimper (FR); LE MENEAH, Emmanuel, 29360 Clohars Carnoet (FR)
(86) Numéro de dépôt international: PCT/FR2022/000134
(87) Numéro de publication internationale: WO 2023/118671

(56) Documents cités:
- WO-A2-2006/092514
- DE-A1- 102012 218 178

## Description

La présente invention concerne une machine d'application de fibres équipée d'un système limiteur de tension particulier, ainsi qu'un procédé de réalisation de pièces en matériau composites au moyen d'une telle machine.

Il est connu, notamment dans le document brevet WO2006/092514 des machines d'application ou de drapage de fibres pour le drapage automatique sur un surface de drapage, telle que la surface d'un moule mâle ou femelle, d'une bande large formée d'une ou plusieurs fibres, en particulier des fibres continues plates de type rubans, couramment appelées mèches, notamment des fibres de carbone constituées d'une multitude de fils ou filaments de carbone.

Ces machines comprennent classiquement une tête d'application de fibres comportant des moyens de guidage pour guider la ou les fibres vers la surface de drapage. Ces machines comprennent en outre des moyens de stockage de fibres, tel qu'un cantre de bobines déporté, et des moyens d'acheminement pour acheminer des fibres desdits moyens de stockage vers la tête, et un système de déplacement apte par exemple à déplacer la tête par rapport à la surface de drapage. Dans le cas d'une bande formée de plusieurs fibres, les moyens de guidage de la tête permettent d'amener vers la surface de drapage les fibres sous la forme d'une bande, dans laquelle les fibres sont disposées parallèlement sensiblement bord à bord. Pour un drapage au contact des fibres, ces machines, appelées classiquement machines de placement de fibres, comprennent une tête équipée d'un rouleau de compactage destiné à venir en contact contre la surface de drapage pour appliquer la bande, les moyens de guidage guidant les fibres vers le rouleau sous la forme d'une bande. Les moyens d'acheminement peuvent comprendre des tubes flexibles, chaque tube flexible est apte à recevoir une fibre dans son passage interne et est de préférence muni d'au moins une lame flexible longitudinale, ladite lame flexible étant disposée sensiblement parallèlement au plan de transport de la fibre reçue dans le passage interne du tube flexible. De tels tubes flexibles forment des moyens d'acheminement simples de conception, d'encombrement et de coûts réduits, permettant d'obtenir des vitesses de défilement élevées, de déporter les moyens de stockage du système de déplacement, d'isoler les fibres de l'extérieur, et de simplifier le système de déplacement de la tête d'application, notamment d'utiliser un système de déplacement tel qu'un bras poly-articulé de type robot six axes standard.

Afin de limiter la tension dans la fibre, il a été proposé dans le document brevet précité de prévoir au moins un système limiteur de tension, disposé entre les moyens de stockage de fibres et la tête d'application, ledit système limiteur de tension comportant au moins deux cylindres parallèles entre eux, sur lesquels une pluralité de fibres sont aptes à venir s'enrouler partiellement, et des moyens d'entraînement pour entraîner en rotation lesdits cylindres sensiblement à la même vitesse. Lesdits moyens d'entraînement sont pilotés par une unité de commande de la machine, de sorte que les vitesses périphériques des cylindres soient supérieures aux vitesses de défilement des fibres, au niveau du rouleau d'application, pour exercer un effort de traction sur les fibres provenant des moyens de stockage, afin de limiter la tension d'appel des fibres au niveau du rouleau d'application à une valeur sensiblement constante, quelle que soit la vitesse de défilement des fibres. Certaines fibres, de par leur fragilité, leur élasticité ou leur pégosité, ne peuvent être en contact direct sur les cylindres en rotation. Pour mettre en œuvre ces fibres, en particulier des fibres pré-imprégnées de résine thermodurcissable, des courroies sont montées autour de chaque cylindre du système limiteur de tension, de sorte qu'une courroie vienne s'intercaler entre chaque fibre et le cylindre, chaque courroie étant apte à adhérer à une fibre et à être entrainée plus ou moins par le cylindre en fonction de la pression exercée par la fibre sur la courroie, ladite pression étant proportionnelle à la tension d'appel sur la fibre.

Un tel système limiteur de tension permet le déroulage de plusieurs bobines ou le dévidage de plusieurs pelotes de fibres avec un seul asservissement, pour des fibres défilant à des vitesses différentes au niveau de la tête d'application. Le système limiteur de tension permet de réduire la tension des fibres au niveau du rouleau quelles que soient leurs vitesses. Un tel système de limiteur de tension s'avère particulièrement efficace et simple de conception, peu encombrant, et peu onéreux.

Toutefois, les opérations de maintenance sur le système limiteur de tension, ainsi que le passage des fibres entre les différents cylindres lors du chargement de la machine avec des bobines ou suite à la casse d'une fibre, peuvent s'avérer longs et fastidieux. Par ailleurs, lors d'arrêts prolongés de la machine, les fibres peuvent avoir tendance à adhérer aux cylindres, ou aux courroies lorsque lesdits cylindres sont équipés de telles courroies, rendant difficile la remise en marche de la machine. Par ailleurs, dans le cas d'un système limiteur de tension équipés de courroies, ces dernières peuvent avoir tendance à s'user, notamment les courroies équipant les premiers cylindres en entrée du système. Leur remplacement nécessite un démontage long et fastidieux du système limiteur de tension.

Le but de la présente invention est de proposer une solution visant à pallier au moins l'un des inconvénients précités.

A cet effet, la présente invention propose une machine d'application de fibres comprenant
- une tête d'application de fibre comportant un rouleau d'application et des moyens de guidage aptes à guider au moins une fibre sur ledit rouleau d'application,
- des moyens de stockage de fibre,
- des moyens d'acheminement pour acheminer au moins une fibre desdits moyens de stockage vers la tête d'application,
- un système de déplacement apte à effectuer un déplacement relatif de la tête d'application par rapport à une surface de drapage, par exemple la surface d'un moule, et
- au moins un système limiteur de tension, disposé entre les moyens de stockage de fibres et la tête d'application, comportant au moins deux cylindres parallèles entre eux, sur lesquels chaque fibre est apte à venir s'enrouler partiellement, et des moyens d'entraînement pour entraîner en rotation lesdits cylindres, sensiblement à la même vitesse, lesdits moyens d'entraînement étant pilotés par une unité de commande de la machine, de sorte que les vitesses périphériques des cylindres soient supérieures aux vitesses de défilement de la ou des fibres,
caractérisée en ce que le système limiteur de tension comprend au moins un premier cylindre et au moins un second cylindre montés en porte-à-faux sur une structure support entre lesquelles chaque fibre est apte à passer, le premier cylindre et/ou le second cylindre étant monté(s) mobile(s) sur la structure support entre au moins une position active dans laquelle chaque fibre est apte à s'enrouler partiellement sur lesdits cylindres, et une position inactive dans laquelle le premier cylindre et le second cylindre sont écartés l'un de l'autre, pour le passage de la ou des fibres dans le système limiteur de tension.

Selon l'invention, les cylindres peuvent être écartés les uns des autres dans une position inactive pour
- faciliter le passage des fibres entre les cylindres du système limiteur de tension avant utilisation du système limiteur de tension,
- limiter, voire supprimer le contact des fibres avec les cylindres lorsque la machine n'est pas utilisée, et ainsi éviter des risques de collage des fibres directement ou indirectement aux cylindres lors d'un arrêt prolongé de la machine, et
- faciliter des opérations de maintenance sur le système limiteur de tension, notamment son nettoyage, par exemple le retrait de fibrilles, le nettoyage des cylindres, ou le nettoyage ou remplacement de courroies montées sur les cylindres et intercalées entre les cylindres et les fibres, tel que décrit ci-après.

Le système limiteur de tension est avantageusement utilisé dans une machine avec des moyens de stockage déportés par rapport à la tête, dans laquelle la distance entre les bobines de fibre et la tête est relativement importante. Il peut également être intégré dans une machine dans laquelle les moyens de stockage de fibres sont montés sur la tête.

Un ou plusieurs systèmes limiteur de tension peuvent être disposés entre les moyens de stockage de fibres et la tête d'application. Ainsi, un système limiteur de tension selon l'invention peut être positionné au niveau des moyens de stockage, de préférence en sortie des moyens de stockage, et/ou intercalé sur les moyens d'acheminement, par exemple le long du bras d'un robot, et/ou en entrée de la tête d'application, dans ce dernier cas le système limiteur de tension peut être embarqué en extrémité du robot, ou intégré à la tête d'application.

Le nombre de cylindres, le diamètre des cylindres, et les portions angulaires de contact sur lesquelles chaque fibre vient en contact, directement ou indirectement, avec les cylindres seront définis par la tension d'appel recherchée au niveau du rouleau d'application et en fonction des contraintes d'encombrement.

La machine peut être prévue pour le drapage d'une seule fibre ou pour le drapage d'une nappe de fibres dans laquelle les fibres sont disposés côté à côte, en particulier sensiblement bord à bord. Dans le cas de plusieurs fibres, les fibres viennent s'enrouler partiellement sur chaque cylindre, en étant décalées les unes par rapport aux autres le long de chaque cylindre.

Selon un mode de réalisation, le(s) premier(s) cylindre(s) et les second(s) cylindre(s) sont montés déplaçables, de préférence en translation, sur la structure support entre au moins une position active et une position ouverte. Dans ce mode de réalisation, la manœuvre des cylindres entre la position active et la position inactive est obtenue en déplaçant à la fois les premiers cylindres et les seconds cylindres de manière à les écarter ou les rapprocher les uns des autres, ce qui facilite le passage des fibres dans le système limiteur de tension, ainsi que les opérations de maintenance, et garantit que les fibres ne soient pas en contact avec les cylindres en position inactive.

Selon un mode de réalisation, le système limiteur de tension comprend des moyens de blocage de la ou des fibres, de préférence au moins en aval des cylindres par rapport à la direction d'avancement des fibres, aptes à bloquer la ou les fibres lorsque les cylindres sont en position inactive. Le blocage des fibres permet de limiter, voire supprimer des déplacements de fibres lorsque les cylindres sont en position inactive, et ainsi d'éviter des sur-longueurs de fibres dans les systèmes en amont et/ou en aval du système limiteur de tension qui pourraient générer des problèmes lors du drapage ultérieur, notamment des tours dans les fibres et/ou des positionnements incorrects des fibres sur des poulies de renvoi par exemple.

Selon un mode de réalisation, le système limiteur de tension comprend des moyens de blocage aval et des moyens de blocage amont disposés respectivement en aval et en amont des cylindres par rapport à la direction d'avancement de la ou des fibres, aptes à bloquer la ou les fibres lorsque les cylindres sont en position inactive. Le blocage des fibres en amont et en aval du système limiteur de tension garantit un positionnement correct des fibres à la fois en amont et en aval du système limiteur de tension lorsque les cylindres sont en position inactive, et ainsi d'éviter les incidents d'acheminement des fibres au redémarrage.

Selon un mode de réalisation, le système limiteur de tension comprend des moyens tendeur, disposés entre les moyens de blocage amont et les moyens de blocage aval, en entrée ou en sortie des cylindres, aptes à être déplacés dans une position active pour tendre la ou les fibres lorsque les cylindres sont en position inactive. L'utilisation de tels moyens tendeur garantit un positionnement correct des fibres sur les cylindres lors de la manœuvre des cylindres de leur positon inactive vers leur position active, ainsi qu'un positionnement correct des fibres dans la position inactive, sans contact avec les cylindres. De préférence, le système limiteur de tension comprend un système de renvoi amont et un système de renvoi aval disposés respectivement en amont et en aval des cylindres, sur lesquels passe(nt) la ou les fibres, les moyens tendeur, formés d'un rouleau tendeur, étant par exemple disposés en aval des cylindres, entre le système de renvoi aval et les moyens de blocage aval.

Selon un mode de réalisation, le(s) premier(s) cylindre(s) et/ou le(s) seconds cylindre(s) sont montés mobiles en translation entre une position ouverte et une position active extrême, et sont aptes à être disposés dans une ou plusieurs positions actives intermédiaires, sélectionnées en fonction des portions angulaires de contact souhaitées entre les fibres et les cylindres. Selon l'invention, il est possible de régler les portions angulaires de contact entre les fibres et les cylindres, en fonction de la nature des fibres utilisées, et ainsi adapter le système limiteur de tension aux besoins.

Selon un mode de réalisation, au moins en entrée du système limiteur de tension, les cylindres sont disposés de sorte qu'en position active, les portions angulaires de contact sur lesquelles les fibres sont en contact, directement ou indirectement, avec les cylindres, augmentent d'amont en aval, par rapport à la direction d'avancement de la ou des fibres en cours d'application. Dans ce mode de réalisation, au moins sur la première série de cylindres sur lesquels les fibres viennent en contact, la portion angulaire de contact augmente d'un cylindre à l'autre d'amont en aval, afin de mieux répartir le phénomène de suppression de tension des fibres sur les différents cylindres, et ainsi d'éviter une usure prématurée des premiers cylindres sur lesquels les fibres passent, et notamment des courroies lorsque lesdits cylindres sont équipés de telles courroies.

Selon un mode de réalisation, pour chaque fibre, une courroie est montée autour de chaque cylindre, de sorte qu'une courroie vienne s'intercaler entre chaque fibre et le cylindre, chaque courroie étant apte à adhérer à une fibre et à être entrainée plus ou moins par le cylindre en fonction de la pression exercée par la fibre sur la courroie, de préférence chaque courroie est montée en boucle sur un chemin de glissement formé en partie par le cylindre et une pièce complémentaire, pour limiter la portion angulaire de contact entre la courroie et le cylindre, la portion angulaire de contact entre une fibre et une courroie étant inférieure ou égale, à la portion angulaire de contact entre la courroie et le cylindre, en forme de croissant de lune montée fixe autour du cylindre, de sorte que des parties d'extrémités de ladite pièce complémentaire viennent tangentiellement s'adapter au cylindre, chaque courroie étant montée autour de la surface périphérique circulaire d'une pièce complémentaire et sur la portion circonférentielle du cylindre non recouverte par ladite pièce complémentaire, des flasques de guidage, en forme générale de C, étant aptes à être montés par encliquetage sur le cylindre et la pièce complémentaire de sorte que chaque fibre et chaque courroie soient guidées entre deux flasques, chaque flasque comprenant à chaque extrémité au moins un ergot apte à venir s'encliqueter élastiquement dans un renfoncement de la pièce complémentaire. Dans ce mode de réalisation, les flasques peuvent aisément être démontés, pour leur remplacement, ou pour permettre le remplacement des courroies.

Selon un mode de réalisation, chaque premier cylindre et chaque second cylindre est équipé d'une roue dentée, les moyens d'entrainement comprennent un moteur d'entrainement unique, une courroie à double denture apte à engrener sur un pignon dudit moteur d'entrainement et sur chaque roue dentée, et un système tendeur apte à tendre la courroie à double denture lorsque le(s) premier(s) cylindre(s) et/ou le(s) second(s) cylindre(s) sont déplacés de leur position active vers leur position inactive. Selon un mode de réalisation, le système tendeur est formé par le moteur monté mobile en translation sur la structure support, et dont le déplacement est obtenu par un vérin.

La présente invention a également pour objet un procédé de fabrication d'une pièce en matériau composite comprenant l'application de fibres continues sur une surface d'application, caractérisé en ce que l'application de fibres est réalisée au moyen d'une machine d'application de fibres telle que définie précédemment, par déplacement relatif de la tête d'application par rapport à la surface de drapage selon des trajectoires de drapage.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la Figure 1 est une vue schématique de côté d'une machine d'application de fibres selon l'invention, comprenant un système limiteur de tension placé dans le cantre ;
- la Figure 2 est une vue schématique en coupe du système limiteur de tension, les cylindres étant en position active extrême ; et,
- la Figure 3 et la Figure 4 sont des vues schématiques en coupe du système limiteur de tension, analogues à celle de la Figure 2, dans lesquelles les cylindres sont respectivement dans une position ouverte et dans une position active intermédiaire.

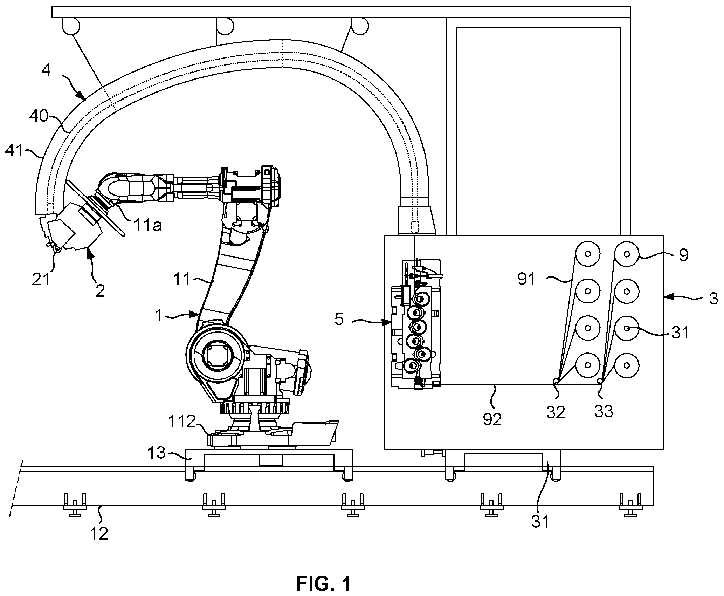

En référence à la Figure 1, la machine d'application comprend un système de déplacement 1 formé d'un bras poly-articulé 11, du type robot six axes, connu en soi, monté mobile sur un axe linéaire 12, une tête d'application 2 montée au poignet d'extrémité 11a du bras poly-articulé, des moyens de stockage 3 de fibres, et des moyens d'acheminement 4 pour acheminer des fibres depuis lesdits moyens de stockage vers la tête d'application.

Le bras poly-articulé 11 est fixé par son embase 112 sur un chariot 13 monté coulissant sur l'axe linéaire 12, ledit axe linéaire étant constitué de deux rails 121 parallèles fixés au sol. Le chariot est équipé de moyens d'entraînement, par exemple de type galets motorisés, asservis par une unité de commande pour le déplacement de la tête de placement le long de ces rails.

La tête d'application de fibres 2, appelée également tête de placement de fibres, comprend de manière connue, un rouleau d'application 21 apte à venir en contact avec un moule pour appliquer une bande formée de plusieurs fibres, par exemple pré-imprégnées de résine. La machine est prévue pour l'application de fibres continues plates, de type rubans, par exemple des fibres de carbone, conditionnées sous forme de bobines. Les moyens de stockage sont formés d'un cantre, schématiquement représentée sous la référence 3, pour recevoir les bobines 9 de fibres. Le cantre est également monté sur un chariot suiveur 31, disposé sur les rails 121 et relié mécaniquement au chariot 13 portant le robot. La machine est prévue ici pour draper des bandes de huit fibres, le cantre comprenant huit mandrins 31, éventuellement motorisés, permettant de recevoir huit bobines de fibre 9. De manière connue en soi, le cantre peut comprendre un rouleau ou poulie oscillante sur laquelle passe la fibre, permettant de contrôler la rotation du mandrin en fonction de la position du rouleau oscillant. De même, un mandrin secondaire peut être associé à chaque mandrin pour le rembobinage d'un éventuel film séparateur au fur et à mesure du débobinage de la fibre.

Les moyens d'acheminement comprennent ici des tubes d'acheminement flexibles, équipés de lames flexibles de rigidification. Les fibres sont acheminées individuellement dans ces tubes d'acheminement du cantre 3 à la tête de placement de fibres 2. Les tubes sont rassemblés en un faisceau, représenté schématiquement sous la référence 40 sur la Figure 1, et sont placés dans le passage interne d'une gaine 41 flexible.

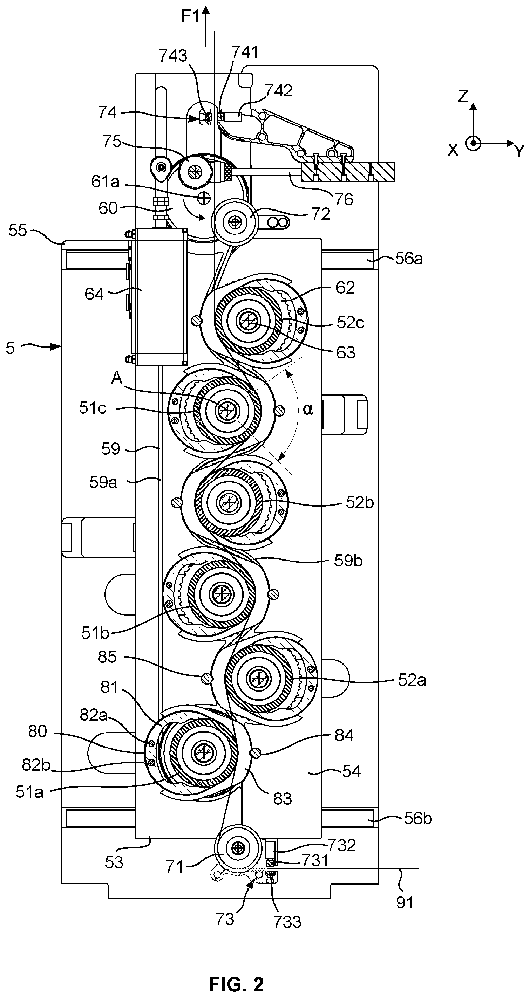

Selon l'invention, la machine est équipée d'un système limiteur de tension 5 pour exercer un effort de traction sur les fibres provenant des bobines et limiter ainsi la tension d'appel des fibres au niveau du rouleau d'application 21. Dans le présent mode de réalisation, le système limiteur de tension est disposé dans le cantre. Les fibres déroulées depuis les bobines sont rassemblées via des poulies de renvoi 32, 33 sous la forme d'une nappe 92 dans laquelle les fibres sont disposées côte à côte, la nappe de fibres passe dans le système limiteur de tension avant d'entrer dans les tubes d'acheminement. Les Figures 2 à 4 représentent des vues en coupe longitudinale du système limiteur de tension au niveau d'une fibre 91 de la nappe 92.

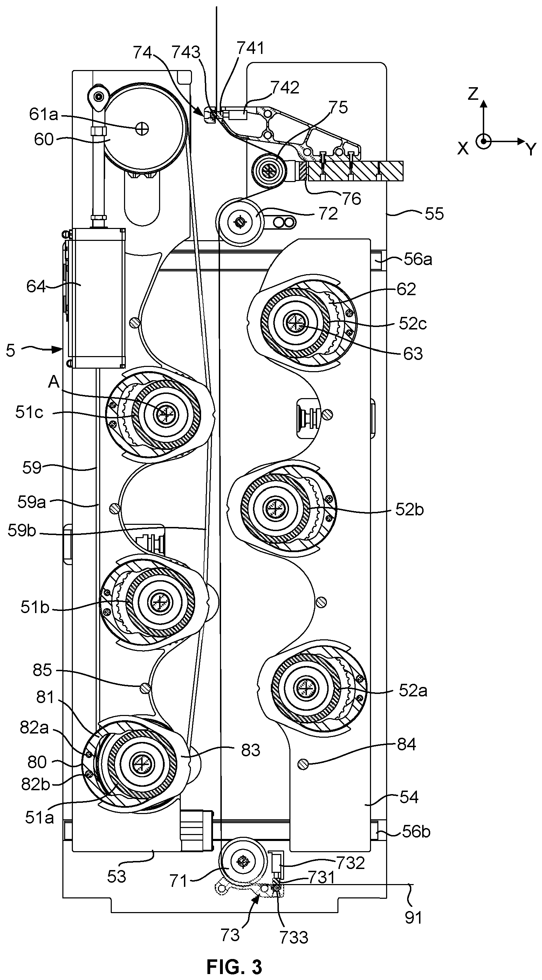

En référence aux Figures 2 et 3, le système limiteur de tension comprend un ensemble de cylindres motorisés, montés rotatifs autour d'axes de rotation A, parallèles à un premier axe X. Le système comprend des premiers cylindres 51a-c montés rotatifs sur une première plaque support 53 et des seconds cylindres 52a-c montés rotatifs sur une deuxième plaque support 54, la nappe de fibres 91 passant entre les premiers cylindres et les seconds cylindres. Dans le mode de réalisation illustré, le système comprend trois premiers cylindres référencés respectivement, d'amont en aval par rapport à la direction d'avancement F1 des fibres, 51a, 51b et 51c, et trois seconds cylindres référencés respectivement d'amont en aval 52a, 52b, 52c.

La première plaque support 53 et la deuxième plaque support 54 sont montées mobiles en translation l'une à côté de l'autre sur une structure support 55 selon un deuxième axe Y, perpendiculaire au premier axe X. Dans le présent mode de réalisation, les axes X et Y sont des axes horizontaux. L'axe Z, qui est perpendiculaires aux axes X et Y, est ainsi un axe vertical. Pour ce montage, les deux plaques support sont montées coulissantes sur deux rails 56a, 56b assemblés à la structure support. Les deux plaques support sont déplaçables par des moyens de motorisation (non représentés), comprenant par exemple un vérin unique pour les deux plaques support, entre une première position fermée illustrée à la Figure 2, dans laquelle les premiers et seconds cylindres sont dans une position active extrême, et une deuxième position ouverte illustrée à la Figure 3 dans laquelle les cylindres sont dans une position inactive.

Les premiers cylindres et les seconds cylindres sont montés décalés les uns par rapport aux autres dans la direction Z sur leur plaque support respective, de sorte qu'en position active extrême des cylindres, chaque fibre est apte à venir en contact par une première face principale contre les premiers cylindres et par une deuxième face principale contre les seconds cylindres. Chaque fibre vient alternativement en contact contre un premier cylindre puis un second cylindre. Chaque fibre vient ainsi successivement en appui contre les cylindres référencés 51a, 52a, 51b, 52b, 51c et 52c.

Chaque fibre est en contact avec un cylindre directement, ou indirectement par l'intermédiaire d'une courroie intercalée entre le cylindre et la fibre tel que décrit ci-après, sur une portion angulaire α de contact qui peut être identique ou différente d'un cylindre à l'autre.

Dans le présent mode de réalisation, le positionnement dans la direction Y des premiers cylindres sur la première plaque support et des seconds cylindres sur la deuxième plaque support est défini de sorte qu'au moins sur une première série de cylindres successifs, les portions angulaires α augmentent d'amont en aval, par rapport à la direction d'avancement de la fibre. A titre d'exemple, dans le mode de réalisation illustré, les portions angulaires augmentent sur les quatre premiers cylindres 51a, 52a, 51b, 52b et diminuent ensuite du quatrième au sixième cylindres 52b, 51c, 52c. Les cylindres 51a, 52a, 51b, 52b, 51c et 52c ont par exemple respectivement une portion angulaire de contact d'environ 25°, 35°, 65°, 90°, 80° et 35°. En variante, les portions angulaires de contact augmentent par exemple sur les trois premiers cylindres 51a, 52a, 51b, restent par la suite sensiblement constantes pour les deux cylindres suivants 52b, 51c, et diminuent entre l'avant dernier et dernier cylindre 51c, 52c.

L'entraînement en rotation des cylindres dans leur position active extrême est assuré par un moteur d'entrainement unique (non représenté) disposé du côté de la structure support qui est opposé aux cylindres, dont l'arbre 61 est équipé d'un pignon 60, une courroie 59 à double denture engrenant avec ledit pignon 60 et avec une roue dentée 62 associée à chaque cylindre. Chaque cylindre est monté solidaire en rotation d'une tige axiale 63, d'axe A montée rotative en porte à faux sur une plaque support. Une roue dentée 62 est assemblée sur la tige axiale, entre le cylindre et la plaque de support. Le moteur d'entrainement est monté sur la première plaque support 53, par exemple en partie supérieure. La courroie 59 présente un premier brin aller 59a s'étendant librement depuis le pignon 60 jusqu'à la roue dentée associée au premier cylindre 51a en entrée du système limiteur de tension, et présente un second brin retour 59b qui s'étend depuis ledit premier cylindre 51a vers le pignon entre les premiers cylindres et les seconds cylindres et qui, dans la position active extrême des cylindres, passent sur les roues dentées associées aux premiers cylindres 51b, 51c et aux seconds cylindres 52a, 52b, 52c. La courroie engrène par sa face dentée intérieure avec le pignon et les roues dentées associées aux premiers cylindres, et par sa face dentée extérieure avec les roues dentées associées aux seconds cylindres. Le moteur entraine le pignon dans le sens anti-horaire, de sorte que les premiers cylindres soient entrainés dans le sens anti-horaire et les seconds cylindres soient entrainés dans le sens horaire.

Pour maintenir la courroie 59 lors du déplacement des plaques support vers la position ouverte, et garantir un bon positionnement de la courroie sur les roues dentées dans la position fermée, le moteur est monté coulissant dans la direction Z, et est apte à être déplacé en translation par un vérin 64 pour écarter le moteur d'entrainement du premier cylindre au fur et mesure du déplacement des plaques support vers la position ouverte, tel qu'illustré à la Figure 3, et ainsi tendre la courroie. Dans la position ouverte, la courroie engrène uniquement avec les roues dentées des premiers cylindres.

Le moteur d'entrainement est commandé par l'unité de commande de la machine de sorte que la vitesse périphérique des cylindres soit supérieure, par exemple d'environ 10%, à la vitesse de défilement des fibres au niveau du rouleau d'application 21lors des opérations de drapage. Les cylindres sont par exemple entraînés à une vitesse constante, dès la mise en marche de la machine, qui sera déterminée en fonction des séquences programmées de drapage.

Le système comprend en entrée des cylindres un système de renvoi amont 71, monté sur la structure support 55, en amont des cylindres par rapport à la direction d'avancement F1 des fibres, formés d'un ensemble de poulies, comprenant une poulie par fibre, montées rotatives sur un même axe de rotation parallèle à l'axe X. En sortie des cylindres, un système de renvoi aval 72 est monté sur la structure support, en aval des cylindres, formé d'un ensemble de poulies, comprenant une poulie par fibre, montées rotatives sur un même axe de rotation parallèle à l'axe X.

En amont du système de renvoi amont 71 par rapport à la direction d'avancement F1 des fibres, le système limiteur de tension comprend un système de blocage amont 73 apte à bloquer chaque fibre de la nappe. Le système de blocage amont comprend une barre de blocage 731 montée à l'extrémité de la tige d'au moins vérin de blocage 732. La barre de blocage présente une surface d'appui plane perpendiculaire à la tige de vérin. Le vérin est apte à déplacer la barre de blocage entre une position inactive et une position active pour bloquer les fibres. En position active, la barre de blocage vient en butée par sa surface d'appui contre un contre-outil 733, pour pincer les fibres. En position inactive la barre de blocage est écartée du contre-outil. Le contre-outil peut être formée d'une barre commune pour l'ensemble des fibres, ou de préférence d'un plot par fibre. Chaque plot est alors avantageusement monté mobile élastiquement, dans une direction parallèle à la tige de vérin de blocage, par exemple au moyen d'une rondelle élastique, afin que le système de blocage puisse bloquer des fibres de différentes épaisseurs, et notamment permettre le blocage d'une fibre au niveau d'une zone dite de raboutage de fibre présentant une épaisseur double.

En aval du système de renvoi aval 72, le système limiteur de tension comprend un système de blocage aval 74, apte à bloquer chaque fibre de la nappe, incluant une barre de blocage 741 montée à l'extrémité de la tige d'au moins vérin de blocage 742, et déplaçable entre une position inactive et une position active dans laquelle la barre de blocage vient en butée contre un contre-outil 743 pour pincer les fibres, le contre-outil comprend de préférence un plot de blocage par fibre, monté de manière élastique pour s'adapter à différentes épaisseurs de fibre.

Un rouleau tendeur 75 est monté, entre le système de renvoi aval 72 et le système de blocage aval 74, à l'extrémité de la tige d'un vérin 76 et est déplaçable en translation selon l'axe Y entre une position inactive illustrée à la Figure 2 et une position active illustrée à la Figure 3 pour tendre les fibres lorsque les plaques support sont en position ouverte. En variante, le rouleau tendeur est remplacé par un ensemble de poulies individuelles montées de manière rotative sur une même tige axiale qui est déplaçable en translation par le vérin, chaque fibre passant sur une poulie.

De préférence, chaque cylindre est équipé de courroies 80 venant s'intercaler entre les fibres et le cylindre. Chaque courroie est montée autour du cylindre et d'une pièce complémentaire ou sabot de guidage 81 monté fixe sur la plaque support sur laquelle est monté le cylindre. Le sabot de guidage présente en section transversale une forme générale de croissant de lune, de rayon supérieur à celui du cylindre, pourvu d'un évidement adapté pour monter le sabot autour du cylindre, sans contact entre le sabot et le cylindre rotatif, avec ses portions d'extrémités qui viennent tangentiellement s'adapter au cylindre. Le sabot présente deux passages traversants pour son montage sur deux barres 82a, 82b montées en porte à faux sur la plaque support. Un seul sabot de guidage peut être prévu pour toute les fibres. Les courroies 80 sont montées sur le bord circulaire périphérique du sabot 81 et sur la portion circonférentielle du cylindre non recouverte par le sabot, définie entre les deux portions d'extrémité du sabot.

Pour assurer le guidage latéral des courroies et des fibres, des flasques 83 sont montés sur le cylindre et le sabot de guidage. Chaque flasque, par exemple en matériau plastique, présente une forme générale de C avec une base dont le bord intérieur présente un rayon de courbure correspondant sensiblement au rayon du cylindre, et deux branches. Chaque flasque vient s'enclencher sur le cylindre, du côté opposé au sabot, ses branches venant s'insérer dans des rainures ménagées dans les portions d'extrémité du sabot, lesdites branches présentant des ergots venant s'encliqueter, par déformation élastique des branches, dans des renfoncements correspondants prévus sur la paroi de fond des rainures du sabot. Chaque courroie est disposée entre deux flasques. Ce système de flasques venant se monter par encliquetage sur le sabot permet un retrait aisé des flasques, en particulier dans la position ouverte des plaques support, notamment pour leur remplacement en cas d'usure, ou pour le remplacement des courroies.

De préférence, pour chaque premier cylindre monté sur la première plaque support, il est prévu une tige de blocage 84, montée en porte-à-faux sur la deuxième plaque support, parallèlement à l'axe X, contre lesquels les flasques associés audit premier cylindre viennent en butée par leur base dans la position fermée des plaques support pour bloquer les flasques sur le cylindre et son sabot de guidage associé, et garantir le positionnement de chaque fibre entre ses deux flasques. De même, la première plaque support porte des tiges de blocage 85 aptes à venir bloquer les flasques associées aux seconds cylindres dans la position fermée des plaques support.

En variante, pour faciliter le montage, pour chaque cylindre, plusieurs sabots sont emmanchés sur les barres 82a, 82b. Deux sabots sont par exemple emmanchés l'un derrière l'autre sur les barres, chaque sabot étant prévu pour quatre fibres.

En fonctionnement, lors des opérations de drapage, les fibres de la nappe passent successivement dans le système de blocage amont 73, entre la barre de blocage 731 en position inactive et le contre-outil 732, sur les poulies de renvoi amont 71, entre les premiers cylindres 51a-c et les seconds cylindres 52a-c en position active extrême, puis dans le système de blocage aval, entre sa barre de blocage 741 en position inactive et son contre-outil 742. Dans cette position active extrême, les fibres ne viennent pas contre les poulies de renvoi aval 72, ou ne font qu'affleurer ces dernières. Pour chaque cylindre et pour chaque fibre, en l'absence de tension d'appel sur une fibre, la courroie est en contact glissant avec le cylindre. Lorsqu'une fibre est soumise à une tension d'appel au niveau du rouleau d'application, la fibre exerce une pression sur la courroie, cette dernière est alors entrainée en rotation par le cylindre, entrainant ainsi la fibre qui adhère à la courroie.

Les cylindres peuvent être amenés en position inactive illustrée à la Figure 3, par déplacement en position ouverte des plaques support 53, 54, pour effectuer des opérations de maintenance sur le système limiteur de tension, notamment un nettoyage des courroies et/ou des cylindres. Les cylindres seront également amenés en position inactive, lors d'une interruption prolongée de la machine entre deux phases de drapage pour éviter un collage des fibres aux courroies, ou lors du passage initial des fibres depuis les bobines jusqu'à la tête. Avant le déplacement des plaques support de la position fermée vers la position ouverte, les vérins 732, 742 des systèmes de blocage amont et aval sont pilotés pour déplacer les barres de blocage 731, 741 en position active pour bloquer la nappe de fibres en amont et en aval des cylindres. Au fur et à mesure du déplacement des plaques support vers leur position ouverte, le moteur d'entrainement est déplacé vers le haut par le vérin 64 pour reprendre la sur-longueur de courroie qui passait sur les roues dentées 62 des seconds cylindres et ainsi maintenir tendue la courroie. De même, au fur et à mesure du déplacement des plaques support vers leur position ouverte, le rouleau tendeur 75 est déplacé par le vérin 76 vers sa position active pour reprendre les sur-longueurs de fibres qui passaient sur les premiers et seconds cylindres. Dans la position ouverte, les fibres sont ainsi tendues verticalement entre le système de renvoi amont et le système de renvoi aval, sans contact avec les courroies des cylindres.

Lorsque les cylindres sont amenés en position inactive pour effectuer le passage initial des fibres depuis les bobines jusqu'à la tête, les barres de blocage des systèmes de blocage seront amenées en position inactive.

Pour ramener les cylindres en position active extrême, les plaques support sont déplacées vers leur position fermée. Au fur et à mesure de ce déplacement, le moteur d'entrainement descend vers le bas, et le rouleau tendeur se déplace vers sa position inactive. Une fois les plaques en position fermée, les barres de blocage sont déplacées vers leur position inactive pour débloquer les fibres de la nappe.

Le vérin 64 est de préférence de type pneumatique et est alimenté en air comprimé, à une pression correspondant à une tension de courroie donnée. Le vérin 76 peut être un vérin pneumatique du même type, alimenté en air comprimé lors du passage des plaques support vers leur position ouverte à une pression correspondant à une tension de fibre donnée.

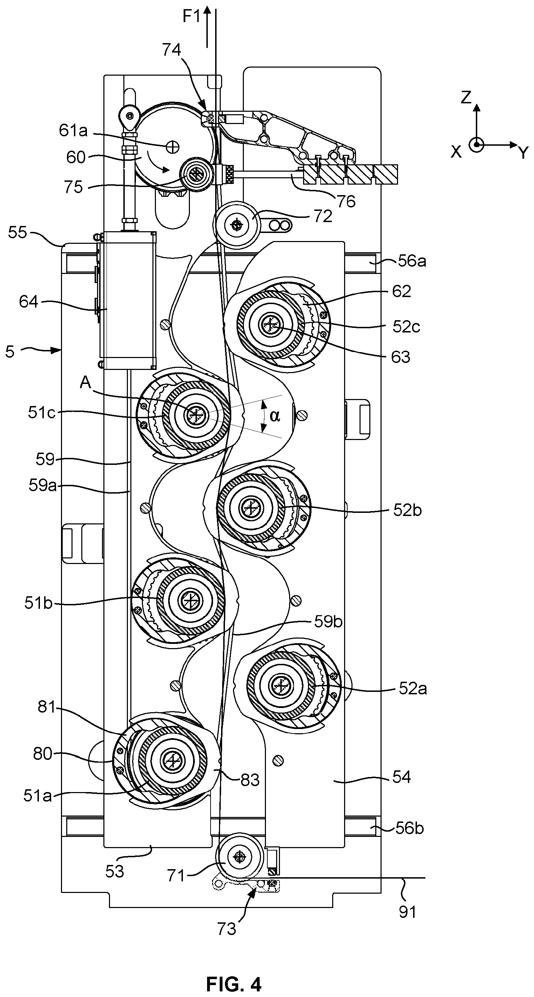

Selon un mode de réalisation, les plaques support peuvent être amenées à différentes positions intermédiaires entre leur position fermée et leur position ouverte, correspondant à différentes positions actives intermédiaires des cylindres pour adapter les portions angulaires de contact en fonction du type de fibre utilisé. La Figure 4 illustre une position active intermédiaire des cylindres utilisée par exemple pour des fibres préimprégnées d'une résine thermoplastique. Dans cet exemple, les fibres viennent successivement en contact uniquement contre les cylindres référencés 51b, 52b, et 51c, sur des portions angulaires plus faibles. Dans cette position active intermédiaire, en sortie du dernier cylindre 52c, les fibres passent sur le système de renvoi aval 72 pour être rediriger verticalement dans le système de blocage aval 74.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention telle que définie dans les revendications.

## Revendications

1. Machine d'application de fibres comprenant une tête (2) d'application de fibre, des moyens de stockage (3) de fibre, des moyens d'acheminement (4) pour acheminer au moins une fibre desdits moyens de stockage vers la tête d'application, un système de déplacement (1) apte à effectuer un déplacement relatif de la tête d'application par rapport à une surface de drapage, et au moins un système limiteur de tension (5) comportant au moins deux cylindres (51a-c, 52a-c) parallèles entre eux, sur lesquels chaque fibre est apte à venir s'enrouler partiellement, et des moyens d'entraînement pour entraîner en rotation lesdits cylindres, **caractérisée en ce que** le système limiteur de tension comprend au moins un premier cylindre (51a-c) et au moins un second cylindre (52a-c) montés en porte-à-faux sur une structure support (55), le premier cylindre et/ou le second cylindre étant monté(s) mobile(s) sur la structure support entre au moins une position active dans laquelle chaque fibre est apte à s'enrouler partiellement sur lesdits cylindres, et une position inactive dans laquelle le premier cylindre et le second cylindre sont écartés l'un de l'autre.

2. Machine selon la revendication 1, **caractérisée en ce que** le(s) premier(s) cylindre(s) (51a-c) et le(s) second(s) cylindre(s) (52a-c) sont montés déplaçables en translation sur la structure support (55) entre au moins une position active et une position ouverte.

3. Machine selon la revendication 1 ou 2, **caractérisée en ce que** le système limiteur de tension comprend des moyens de blocage (73, 74) de la ou des fibres aptes à bloquer la ou les fibres lorsque les cylindres sont en position inactive.

4. Machine selon la revendication 3, **caractérisée en ce que** le système limiteur de tension comprend des moyens de blocage aval (74) et des moyens de blocage amont (73) disposés respectivement en aval et en amont des cylindres (51a-c, 52a-c) par rapport à la direction d'avancement de la ou des fibres, aptes à bloquer la ou les fibres lorsque les cylindres sont en position inactive.

5. Machine selon la revendication 4, **caractérisée en ce que** le système limiteur de tension (5) comprend des moyens tendeur (75, 76), disposés entre les moyens de blocage amont (73) et les moyens de blocage aval (74), aptes à être déplacés dans une position active pour tendre la ou les fibres lorsque les cylindres sont en position inactive.

6. Machine selon l'une des revendications 1 à 5, **caractérisée en ce que** le(s) premier(s) cylindre(s) (51a-c) et/ou le(s) seconds cylindre(s) (52a-c) sont montés mobiles en translation entre une position ouverte et une position active extrême, et sont aptes à être disposés dans une ou plusieurs positions actives intermédiaires, sélectionnées en fonction des portions angulaires (α) de contact souhaitées entre les fibres et les cylindres.

7. Machine selon l'une des revendications 1 à 6, **caractérisée en ce qu'**au moins en entrée du système limiteur de tension (5), les cylindres (51a-c, 52a-c) sont disposés de sorte qu'en position active, les portions angulaires (α) de contact sur lesquelles les fibres sont en contact, directement ou indirectement, avec les cylindres, augmentent d'amont en aval, par rapport à la direction d'avancement de la ou des fibres.

8. Machine selon l'une des revendications précédentes, **caractérisée en ce que**, pour chaque fibre, une courroie (80) est montée autour de chaque cylindre (51a-c, 52a-c), de sorte qu'une courroie vienne s'intercaler entre chaque fibre et le cylindre, chaque courroie (80) est montée en boucle sur un chemin de glissement formé en partie par le cylindre (51a-c, 52a-c) et une pièce complémentaire (81), en forme de croissant de lune monté fixe autour du cylindre, de sorte que des parties d'extrémités de ladite pièce complémentaire viennent tangentiellement s'adapter au cylindre, chaque courroie étant montée autour de la surface périphérique circulaire d'une pièce complémentaire et sur la portion circonférentielle du cylindre non recouverte par ladite pièce complémentaire, des flasques (83) de guidage, en forme générale de C, étant aptes à être montés par encliquetage sur le cylindre et la pièce complémentaire de sorte que chaque fibre et chaque courroie soient guidées entre deux flasques, chaque flasque comprenant à chaque extrémité au moins un ergot apte à venir s'encliqueter élastiquement dans un renfoncement de la pièce complémentaire.

9. Machine selon l'une des revendications précédentes, **caractérisée en ce que** chaque premier cylindre et chaque second cylindre est équipé d'une roue dentée (62), les moyens d'entrainement comprennent un moteur d'entrainement unique, une courroie (59) à double denture apte à engrener sur un pignon (60) dudit moteur d'entrainement et sur chaque roue dentée, et un système tendeur apte à tendre la courroie à double denture lorsque le(s) premier(s) cylindre(s) et/ou le(s) second(s) cylindre(s) sont déplacés de leur position active vers leur position inactive.

10. Procédé de fabrication d'une pièce en matériau composite comprenant l'application de fibres continues sur une surface d'application, **caractérisé en ce que** l'application de fibres est réalisée au moyen d'une machine d'application de fibres selon l'une des revendications 1 à 9, par déplacement relatif de la tête d'application par rapport à la surface de drapage selon des trajectoires de drapage.

## Patentansprüche

1. Faserapplikationsmaschine, umfassend einen Faserapplikationskopf (2), Faserspeichermittel (3), Zuführmittel (4) zum Zuführen mindestens einer Faser der Speichermittel zum Applikationskopf, ein Verschiebesystem (1), das imstande ist, eine relative Verschiebung des Applikationskopfes in Bezug auf eine Drapieroberfläche durchzuführen, und mindestens ein Spannungsbegrenzungssystem (5), das mindestens zwei zueinander parallele Zylinder (51a-c, 52a-c) beinhaltet, auf denen jede Faser imstande ist, sich teilweise aufzuwickeln, und Antriebsmittel, um die Zylinder in Drehung anzutreiben, **dadurch gekennzeichnet, dass** das Spannungsbegrenzungssystem mindestens einen ersten Zylinder (51a-c) und mindestens einen zweiten Zylinder (52a-c) umfasst, die freitragend auf einer Trägerstruktur (55) montiert sind, wobei der erste Zylinder und/oder der zweite Zylinder zwischen mindestens einer aktiven Position, in der jede Faser imstande ist, sich teilweise auf die Zylinder zu wickeln, und einer inaktiven Position, in welcher der erste Zylinder und der zweite Zylinder voneinander entfernt sind, beweglich auf der Trägerstruktur montiert sind.

2. Maschine nach Anspruch 1, **dadurch gekennzeichnet, dass** der/die erste(n) Zylinder (51a-c) und der/die zweite(n) Zylinder (52a-c) zwischen mindestens einer aktiven Position und einer offenen Position verschiebbar auf der Trägerstruktur (55) montiert sind.

3. Maschine nach Anspruch 1 oder 2, **dadurch gekennzeichnet, dass** das Spannungsbegrenzungssystem Mittel (73, 74) zum Blockieren der Faser(n) umfasst, die imstande sind, die Faser(n) zu blockieren, wenn sich die Zylinder in der inaktiven Position befinden.

4. Maschine nach Anspruch 3, **dadurch gekennzeichnet, dass** das Spannungsbegrenzungssystem stromabwärts befindliche Blockiermittel (74) und stromaufwärts befindliche Blockiermittel (73) umfasst, die jeweils stromabwärts und stromaufwärts der Zylinder (51a-c, 52a-c) in Bezug auf die Vorschubrichtung der Faser(n) angeordnet sind, die imstande sind, die Faser(n) zu blockieren, wenn sich die Zylinder in der inaktiven Position befinden.

5. Maschine nach Anspruch 4, **dadurch gekennzeichnet, dass** das Spannungsbegrenzungssystem (5) Spannmittel (75, 76) umfasst, die zwischen den stromaufwärts befindlichen Blockiermitteln (73) und den stromabwärts befindlichen Blockiermitteln (74) angeordnet sind, die imstande sind, in eine aktive Position verschoben zu werden, um die Faser(n) zu spannen, wenn sich die Zylinder in der inaktiven Position befinden.

6. Maschine nach einem der Ansprüche 1 bis 5, **dadurch gekennzeichnet, dass** der/die erste(n) Zylinder (51a-c) und/oder der/die zweite(n) Zylinder (52a-c) translationsbeweglich zwischen einer offenen Position und einer äußersten aktiven Position montiert sind und imstande sind, in einer oder mehreren aktiven Zwischenpositionen angeordnet zu werden, die in Abhängigkeit von gewünschten Kontaktwinkelabschnitten (α) zwischen den Fasern und den Zylindern ausgewählt werden.

7. Maschine nach einem der Ansprüche 1 bis 6, **dadurch gekennzeichnet, dass** mindestens am Eingang des Spannungsbegrenzungssystems (5) die Zylinder (51a-c, 52a-c) angeordnet sind, sodass in aktiver Position die Kontaktwinkelabschnitte (α), in denen die Fasern direkt oder indirekt mit den Zylindern in Kontakt sind, in Bezug auf die Vorschubrichtung der Faser(n) von stromaufwärts zu stromabwärts zunehmen.

8. Maschine nach einem der vorstehenden Ansprüche, **dadurch gekennzeichnet, dass** für jede Faser ein Riemen (80) um jeden Zylinder (51a-c, 52a-c) herum montiert ist, sodass sich zwischen jeder Faser und dem Zylinder ein Riemen einlegt, jeder Riemen (80) in einer Schlaufe auf einer Gleitbahn montiert ist, die teilweise durch den Zylinder (51a-c, 52a-c) und ein halbmondförmiges Ergänzungsstück (81) gebildet wird, das fest um den Zylinder herum montiert ist, sodass sich Endteile des Ergänzungsstücks tangential dem Zylinder anpassen, wobei jeder Riemen um die kreisförmige Umfangsoberfläche eines Ergänzungsstücks und auf dem Umfangsabschnitt des Zylinders, der nicht von dem Ergänzungsstück bedeckt ist, montiert ist, wobei Führungsflansche (83) mit einer allgemeinen C-Form durch Einrasten auf den Zylinder und das Ergänzungsstück imstande sind, montiert zu werden, sodass jede Faser und jeder Riemen zwischen zwei Flanschen geführt werden, wobei jeder Flansch an jedem Ende mindestens einen Zapfen umfasst, der imstande ist, elastisch in eine Vertiefung des Ergänzungsstücks einzurasten.

9. Maschine nach einem der vorstehenden Ansprüche, **dadurch gekennzeichnet, dass** jeder erste Zylinder und jeder zweite Zylinder mit einem Zahnrad (62) ausgestattet sind, wobei die Antriebsmittel einen einzigen Antriebsmotor, einen doppeltverzahnten Riemen (59), der imstande ist, in ein Ritzel (60) des Antriebsmotors und in jedes Zahnrad einzugreifen , und ein Spannsystem umfasst, das imstande ist, den doppeltverzahnten Riemen zu spannen, wenn der/die erste(n) Zylinder und/oder der/die zweite(n) Zylinder aus ihrer aktiven Position in ihre inaktive Position verschoben werden.

10. Verfahren zum Herstellen eines Bauteils aus Verbundwerkstoff, umfassend das Applizieren von Endlosfasern auf eine Applikationsoberfläche, **dadurch gekennzeichnet, dass** das Applizieren von Fasern mittels einer Faserapplikationsmaschine nach einem der Ansprüche 1 bis 9 durch relatives Verschieben des Applikationskopfes in Bezug auf die Drapieroberfläche in Drapierbahnen erfolgt.

## Claims

1. Fibre application machine comprising a fibre application head (2), fibre storage means (3), conveying means (4) for conveying at least one fibre from the said storage means to the application head, **characterized in that** it further comprises a displacement system (1) able to effect a relative displacement of the application head with respect to a lay-up surface, and at least one tension limiting system (5) comprising at least two cylinders (51a-c, 52a-c) parallel to each other, on which each fibre is able to be partially wound, and drive means for driving said cylinders in rotation, **characterised in that** the tension limiting system comprises at least a first cylinder (51a-c) and at least a second cylinder (52a-c) cantilever-mounted on a support structure (55), the first cylinder and/or the second cylinder being mounted mobile on the support structure between at least one active position in which each fibre is able to be partially wound on said cylinders, and an inactive position in which the first cylinder and the second cylinder are spaced apart from each other.

2. Machine according to claim 1, **characterised in that** the first cylinder(s) (51a-c) and the second cylinder(s) (52a-c) are mounted displaceable in translation on the support structure (55) between at least one active position and an open position.

3. Machine according to claim 1 or 2, **characterised in that** the tension limiting system comprises fibre blocking means (73, 74) able to block the fibre or fibres when the cylinders are in the inactive position.

4. Machine according to claim 3, **characterised in that** the tension limiting system comprises downstream blocking means (74) and upstream blocking means (73) arranged respectively downstream and upstream of the cylinders (51a-c, 52a-c) with respect to the travel direction of the fibre or fibres, able to block the fibre or fibres when the cylinders are in the inactive position.

5. Machine according to claim 4, **characterised in that** the tension limiting system (5) comprises tensioning means (75, 76), arranged between the upstream blocking means (73) and the downstream blocking means (74), able to be displaced into an active position in order to tighten the fibre or fibres when the cylinders are in the inactive position.

6. Machine according to one of claims 1 to 5, **characterised in that** the first cylinder(s) (51a-c) and/or the second cylinder(s) (52a-c) are mounted mobile in translation between an open position and an extreme active position, and are able to be arranged in one or more intermediate active positions, selected depending on the desired angular portions (α) of contact between the fibres and the cylinders.

7. Machine according to one of claims 1 to 6, **characterised in that**, at least at the inlet to the tension limiting system (5), the cylinders (51a-c, 52a-c) are arranged so that, in the active position, the angular portions (α) of contact over which the fibres are in contact, directly or indirectly, with the cylinders, increase from upstream to downstream, with respect to the travel direction of the fibre or fibres.

8. Machine according to one of the preceding claims, **characterised in that**, for each fibre, a belt (80) is mounted around each cylinder (51a-c, 52a-c), so that a belt is interposed between each fibre and the cylinder, each belt (80) is mounted in a loop on a sliding path formed partly by the cylinder (51a-c, 52a-c) and a complementary part (81) in the form of a crescent moon mounted fixedly around the cylinder, so that end parts of the said complementary part fit tangentially onto the cylinder, each belt being mounted around the circular peripheral surface of a complementary part and on the circumferential portion of the cylinder not covered by said complementary part, guide flanges (83), generally C-shaped, being able to be mounted by snap-fitting on the cylinder and the complementary part so that each fibre and each belt are guided between two flanges, each flange comprising at each end at least one tab able to snap-fit elastically into a recess in the complementary part.

9. Machine according to one of the preceding claims, **characterised in that** each first cylinder and each second cylinder is equipped with a toothed wheel (62), the drive means comprising a single drive motor, a double-toothed belt (59) able to mesh on a pinion (60) of said drive motor and on each toothed wheel, and a tensioning system able to tighten the double-toothed belt when the first cylinder(s) and/or the second cylinder(s) are displaced from their active position to their inactive position.

10. Method for manufacturing a composite material part comprising the application of continuous fibres onto an application surface, **characterised in that** the application of fibres is carried out by means of a fibre application machine according to one of claims 1 to 9, by relative displacement of the application head with respect to the lay-up surface according to lay-up trajectories.
